# EUROPEAN PATENT SPECIFICATION

(11) **EP 1 339 150 B1**
(45) Date of publication and mention of the grant of the patent: **12.11.2008**
(21) Application number: 03075499.8
(22) Date of filing: 20.02.2003
(51) Int. Cl.: H02G 3/18

(54) **Flush-type box for electric elements**
Einbaudose für elektrische Elemente
Boitier à montage à affleurement pour éléments électriques

(30) Priority: 22.02.2002 BE 200200122
(43) Date of publication of application: 27.08.2003
(73) Proprietor: JVK Plastics, naamloze vennootschap, 2880 Bornem (BE)
(72) Inventor: Verlinde, Willy, 8650 Gullegem (BE)
(74) Representative: Donné, Eddy

(56) References cited:
- DE-A- 3 734 029
- DE-C- 817 316
- DE-C- 3 507 897
- DE-U- 7 903 428
- US-A- 5 084 596

## Description

The present invention concerns a flush-type box for electric elements, in particular for building switches, socket outlets and the like in walls.

It is known that flush-type boxes for such electric elements generally consist of a housing in the shape of a box, having a bottom and one or several side walls, whereby inlets for wires, tubes and the like are formed in these side walls.

It is also known that such flush-type boxes can be provided with special equipment which make it possible to fix the electric elements efficiently in the flush-type box.

Thus, it is generally known, for example, to provide mesh parts in the shape of a ribbed surface on the inside of two or several side walls, offering a better grip to the conventional spread claws which, as is generally known, are usually applied for fixing electric elements in such a flush-type box.

It is also known that such a flush-type box can be equipped with parts forming a seat for screws, bolts or the like, situated in a fixed position near the edge of the flush-type box, such that the electric elements and/or the supporting plates, cover plates and/or intermediate plates used thereby can be fixed to the flush-type box by means of screws.

Those seat forming parts for screws, bolts or the like, can form an integral part with the box, or consist of previously assembled parts, or of separate parts that have to be installed when needed.

In this context the patent DE 37.34.029 discloses a flush type electric box for mounting onto a cable duct containing amongst others, vertical seat-forming parts that form an integral part with the box. They are capable of accommodating screws or the like to fix a top plate, or an electric element, of more than one pre-determined size.
Additionally the box is provided on the inside with seat-forming parts of a second kind, that are provided as completely separate parts. In a first position, they have to be hooked under a certain angle into a corresponding hole in the bottom plate. Then, when tilted into a second, vertical, position, they are capable of accommodating a screw or a bolt with which a lid or an electric element can be fixed to the top of the box.

It is furthermore explained in the description that this second type of separate seat forming part is made of a different type of material than the box, in order to withstand any stresses it will be subject to, in particular continuous tension.

In patent DE 35.07.879 a flush-type electric box for installation in cable ducts is described in which on the inside, three different seat bearing parts are provided for fixing covers, or other types of equipment, particularly an outlet for industrial use. In order to accommodate different sizes, means are provided to adjust the seat-forming parts to the corresponding dimensions of the cover or electric element to be installed.

The latter can be done in several ways:
either with vertical elements that can slide laterally along the side walls, and in addition have sliding nuts or other mechanical fastening means on top;
or by using separate elements that are fixed into the side walls and have holes for different sizes of electric elements on top;
or by using separate moulded parts and pieces that can be fixed in predetermined vertical positions resulting in different mounting heights.

Another embodiment discloses pre-mounted and pre-assembled swivelling corner parts, mounted on a metal shaft, the latter being fixed in vertical position between a top plate covering the corners and the bottom plate of the box.

A major disadvantage of the latter is the complicated and costly construction of the pre-assembled swivelling part providing seat bearing facilities for different sizes.

It is also suggested in patent DE 79.03.428 to provide adjustable seat bearing means to a flush type electric box suitable for installation in a cable duct, by using two separate parts that are asymmetrical in shape and need to be inserted vertically into slots provided in the side walls. These parts are capable of being adjusted in two vertical positions offering seat bearing capabilities at two predetermined heights. At the same time, because of their asymmetry, they also offer two different widths as seat bearing means, depending on how they are inserted, whether the front of the insert is facing the inside of the box or the outside.

A disadvantage of both types of seat forming parts, whether fixed, or provided as separate parts, is that once installed inside the box, they will invariably reduce the useful space available for any other electrical equipment.

When the flush-type box is equipped with seat-forming parts for screws provided in a fixed position, users will often assume, in practice, that a fixing by means of screws is required anyway when applying such flush-type boxes. Such flush-type boxes with seat-forming parts provided in a fixed position are disadvantageous in that, although they often allow to fix the electric elements in another manner in it, they are usually not bought by potential users when they do not wish to fix anything by means of screws.

Another disadvantage of such flush-type boxes with fixed, seat-forming parts for screws consists in that the user is often but little aware of the fact that it is necessary to use the right screws to provide for such a fixing.

The invention aims a new sort of flush-type box offering several advantages in relation to the known embodiments, and whereby the above-mentioned disadvantages are preferably also excluded.

To this aim, the invention concerns a flush-type box for electric elements of the type which consists of a box-shaped housing with a bottom and side walls, whereby a seat-forming part for a screw or the like is provided on one or several of the side walls, characterised in that the seat-forming part, the seat-forming parts respectively, can assume at least two positions, a first and a second position respectively, whereby the second position forms a service position, whereas the first position is different in relation to the latter, whereby the seat forming part is made in one piece with the side wall upon which it is provided , and is made of plastic, and whereby the seat forming part is hinge mounted to the accompanying side wall.

By commercialising the flush-type box in a condition whereby the seat-forming parts are situated in the aforesaid first position, it is clear to the users that electric elements can possibly also be fixed in another way in the flush-type box, and that fixing by means of screws is possibly optional. Potential buyers of such flush-type boxes, especially do-it-yourselfers, will be less inclined then to leave such flush-type boxes for what they are, even when they do not intend to apply a fixing by means of screws.

As, in practice, the seat-forming parts have to be intentionally put in a service position, the users will be more aware of the fact that fixing by means of screws is required, so that they will consciously look for the right screws.

Further, this flush-type box offers the advantage that, when no use is made of a fixing by means of screws, the seat-forming parts can be left in their first position, which position can be selected such that these parts form a minimal obstacle to other applications.

Preferably, the flush-type box comprises locking means to lock each seat-forming part concerned in its second position, in particular a snap-in system, whereby a snap-in automatically occurs when such a seat-forming part is moved from the first position into the second position. Thus, the seat-forming parts can be simply put from the first position, which normally is a starting position, into the second position, after which they remain in this second position.

According to the most preferred embodiment, each seat-forming part concerned is made in one piece with the side wall on which it is provided, from plastic. Thus, the whole can be realised in a mould in a single die-casting cycle, so that additional mounting operations are no longer required.

According to a major preferred characteristic, the seat-forming parts are fixed to the accompanying side wall in a hinged manner. Thus is obtained that these seat-forming parts, by rotating them, automatically end up in the second position.

According to a practical embodiment, the flush-type box is characterised in that each seat-forming part concerned is situated thus in its second position that it is situated with its axial axis at right angles or almost at right angles to the surface defined by the open front side of the flush-type box, whereas, in the first position, it extends with its axial axis in another direction in relation to the flush-type box.

In order to better explain the characteristics of the invention, the following preferred embodiments are described as an example only without being limitative in any way, with reference to the accompanying drawings, in which:
figure 1 represents a flush-type box according to the invention in perspective;
figures 2 and 3 represent views to a larger scale of the parts indicated by F2 and F3 respectively in figure 1;
figures 4 and 5 represent views analogous to those of figures 2 and 3, but for another position of the part represented therein;
figure 6 represents a section according to line IX-IX in figure 2;
figures 7, 8 and 9 represent sections according to lines VII-VII, VIII-VIII and VI-VI respectively in figure 4;
figure 10 represents a variant of the embodiment in perspective;
figure 11 represents another variant.

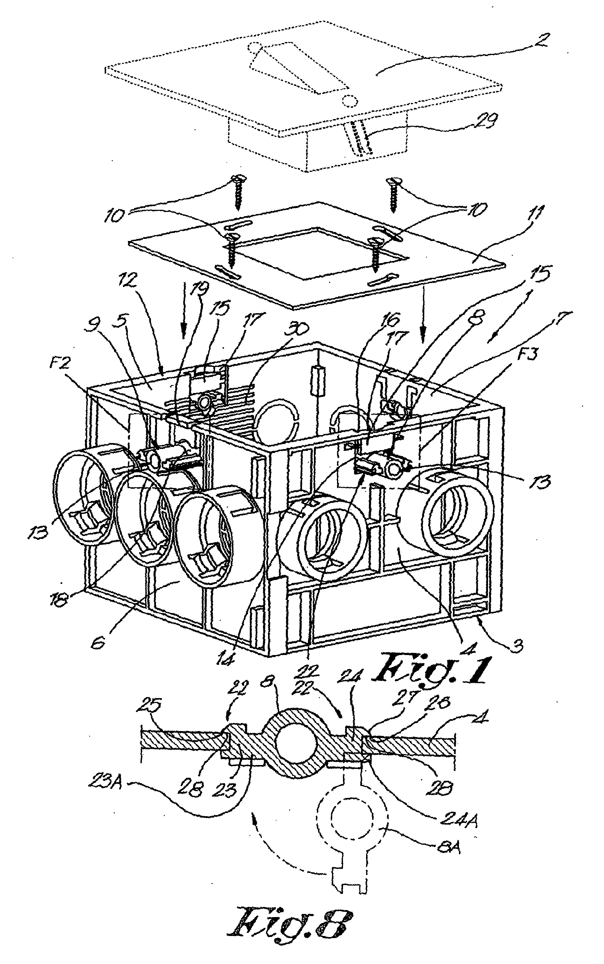

As is shown in figure 1, the invention concerns a flush-type box 1 for electric elements 2.

This flush-type box 1 consists of a housing in the shape of a box having a bottom 3 and, in this case, four side walls 4-5-6-7.

On one or several of the side walls 4-5-6-7, in the given example on all four of them, is each time provided a seat-forming part, a part 8 on the side walls 4 and 5 and a part 9 on the side walls 6 and 7 respectively, in which can be screwed a screw 10 or the like in order to fix an electric element 2 and/or a cover plate or intermediate plate 11 or the like to the flush-type box 1.

The seat-forming parts 8-9 are made in the shape of cylindrical bushes in which can be screwed self-tapping screws 10.

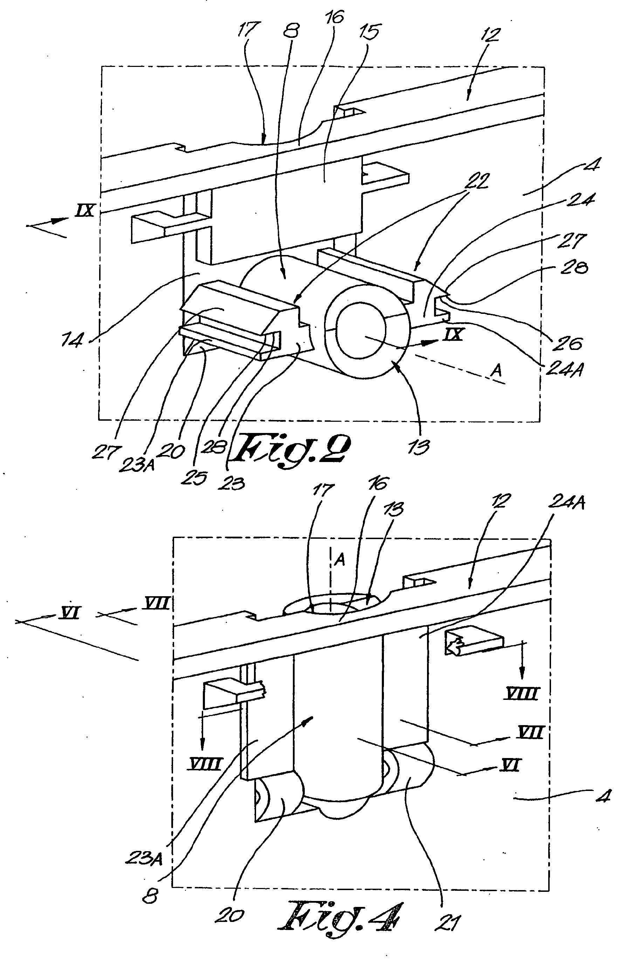

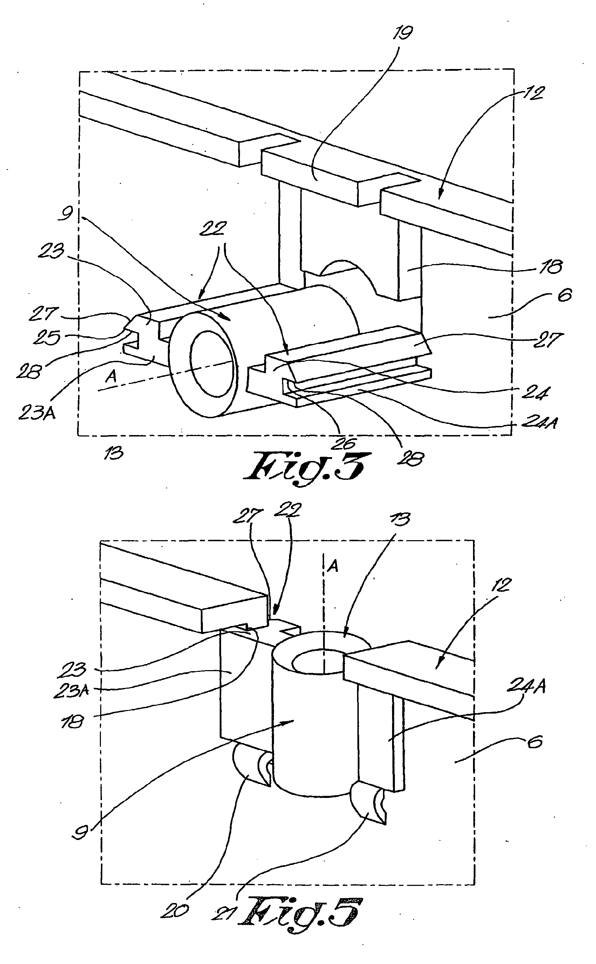

The seat-forming parts 8-9 can be moved in relation to the side wall 4-5, 6-7 respectively, to which they are attached, between at least two positions, namely a first position as represented in figures 2 and 3, and a second position as represented in figures 4 and 5 respectively, whereby the second position forms a service position, whereas the first position forms a position different from the latter.

Such a seat-forming part 8-9 is hereby situated in its second position such that, as indicated in figures 4 and 5, it extends with its axial axis A at right angles to or almost at right angles to the surface defined by the open front side 12 of the flush-type box 1, whereas in the first position, as indicated in figures 2 and 3, it extends with its axial axis A in another direction in relation to the flush-type box 1. In particular, the parts 8-9 are turned sideways in their first position, in other words, they are situated such that they extend with their axial axis A crosswise to the side walls 4-5-6 concerned.

The seat-forming parts 8-9 are provided on the side walls 4-5-6-7 in such a manner that they are situated with their front end 13 at the height of or almost at the height of the front side 12 of the flush-type box 1 in the second position, whereas, in the first position, they are removed from the front side of the flush-type box 1 with their front end 13, in particular are situated more backward, preferably at a distance of 0.5 to 1 cm from the front side 12.

In the side walls 4 and 5 are formed openings 14 at the height of the seat-forming parts 8 which, in the given example, are partially sealed by means of a break-out part 15, such that the parts 8 can take place in the openings 14 in their second position.

The opening 14 is limited on the top side by a continuous edge part 16 which extends over the opening 14. In this edge part 16 is formed a recess 17, such that the free end 13 can still be reached by screws 10. As represented in figure 4, the seat-forming parts 8 are still partially situated under the edge part 16 in their second position.

In an analogous manner, recesses 18 are formed in the side walls 6 and 7 at the height of the seat-forming parts 9, which are partially sealed by means of a break-out part 19 in the given example, such that the parts 9 can take place in the recesses 18 in their second position.

The seat-forming parts 8-9 are each time made in one piece with the side wall 4-5-6 or 7 onto which they are attached, and they are made of plastic. To this end, they are hinge-mounted to the accompanying side wall, in this case by means of bendable parts, in particular film hinges, 20 and 21 respectively.

Further, the whole is provided with locking means 22 to lock the seat-forming parts 8-9 in their second position, which, as is represented in the figures and as will be further described, are preferably made in the shape of a snap-in system.

These locking means 22 to this end consist of hook-shaped parts 23-24 on two diametrically opposed sides of each part 8, 9 respectively, which can mesh behind edge parts 25-26 of the accompanying side wall 4-5-6 or 7. These hook-shaped parts 23-24 are formed of laterally protruding, axially directed flanges with a winding side 27 and a stop side 28 which can work in conjunction with the edge parts 25-26.

The whole is made such that, when the seat-forming parts 8-9 are tilted into the service position, these parts 8-9 can be put in the locked position by simply pressing them.

As is represented, the seat-forming parts 8-9 can be provided with a limitation, formed by parts 23A and 24A, which make sure that any further pressing towards the inner side of the flush-type box 1 becomes impossible. Also, as a result, the seat-forming part 8 or 9, after being pushed in, will be fixed in the vertical position as if it were, which leads to an even better result for fixing the electric material to be built in.

As represented, special mesh parts for claws 29 may still be present in a conventional manner on the inside of one or several side walls 4-5-6-7, in particular in the shape of a ribbed surface 30 or such. According to a simplified variant, these mesh parts may also simply consist of the inner sides of the side walls 4-5 and/or 6-7 concerned, irrespective of whether these inner sides either or not have a ribbed surface 30.

The use and operation of the flush-type box 1 is mainly as described hereafter.

If one wishes to mount an electric element 2, for example a switch, in the flush-type box 1 by means of claws 29 alone, the seat-forming parts 8-9 are preferably simply left in their first position. The element 2 is then merely secured by spreading the claws 29 outward in the known manner, such that they mesh in the ribbed surfaces 30. In the first position, the seat-forming parts 8-9 provide extra rigidity to the side walls upon which they are provided. Thanks to this extra rigidity, the pressure exerted by the claws 29 will be better opposed.

If one wishes to fix an electric element 2 and/or a cover plate or intermediate plate 11 by means of the screws 10, the seat-forming parts 8 and/or 9 are brought in the second position by turning them upward in a pivoting manner, as a result of which they evolve from the condition as represented in figures 2, 3 and 6 into the condition as represented in figures 4, 5 and 7 to 9. As a result, the seat-forming parts 8 and/or 9 concerned end up in the openings 14, the recesses 18 respectively, whereby, as is shown in figure 8, the hook-shaped parts 23-24 mesh behind the edge parts 25-26.

The break-out parts 15 and 19 can be removed beforehand, but when they are connected to the side wall 4-5 or 6-7 concerned by means of a weak connection, one can also obtain that they break out automatically when a pressure is exerted on them by the seat-forming parts 8-9.

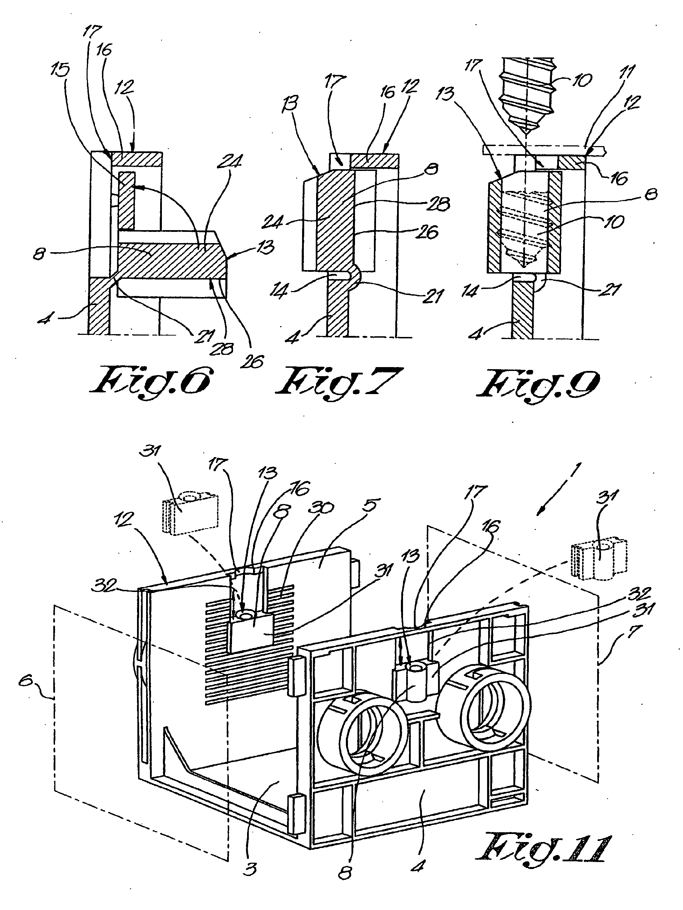

As soon as the parts 8 and/or 9 are situated in the second position, the fixing by means of the screws 10 can take place. It should be noted that, as the edge part 16 extends over the part 8, as is shown in figure 9, a rather large tensile strain may be exerted on the part 8 by means of the screws, as such part 8 is then held in place by the connection via the film hinges 20-21 as well as by the stop formed by the edge part 16.

Naturally, it is also possible to fix an element 2 by combining both techniques, in other words, by making use of the claws 29 as well as of the screws 10.

The invention can be realised according to different variants and is not restricted to a specific embodiment of a flush-type box.

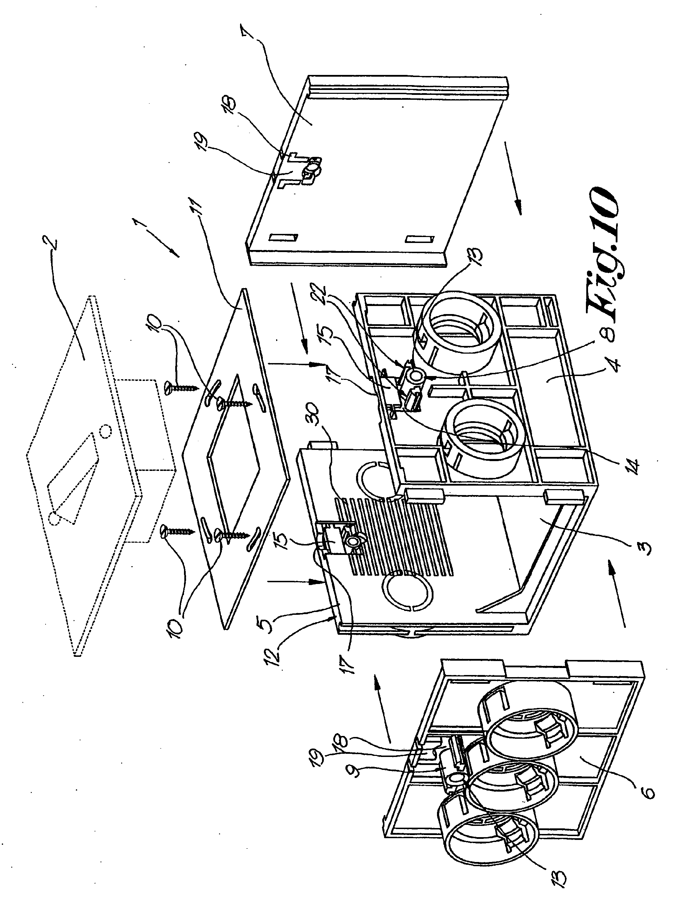

For example, figure 10 represents a variant whereby the flush-type box 1 comprises removable side walls 6-7 and the parts 9 are thus part of these removable side walls 6-7, as opposed to the embodiment of figure 1, where the bottom 3 and all the side walls 4-5-6-7 are formed in one piece.

In order to make sure that the parts 8-9 can move between the above-mentioned two positions, one does not necessarily have to use a hinged joint. For example, figure 11 represents a variant in which the parts 8 are part of or are made as slidable elements 31 which can move in openings 32 between a first position, as represented in figure 11, and an upward shifted second position in which the parts 8 are then situated immediately under the edge part 16, and whereby a snap effect must possibly be overcome to provide for such a shift. The elements 31 can hereby be made as separately formed parts, which can for example snap in the opening 32 and can subsequently be moved between the aforesaid two positions. The latter makes it possible to commercialise the flush-type box 1 with pre-mounted elements 31, although the elements 31 have been manufactured as separate, so that they cannot get lost, whereas a movement between the first and the second position is still possible.

It is clear that the invention also relates to flush-type boxes whereby only a limited number of the seat-forming parts 8-9 can be moved between two positions. Nor must such seat-forming parts 8-9 be provided on all side walls 4-5-6-7. Moreover, the invention can also be applied to other than square flush-type boxes, for example to hexagonal, octagonal or round flush-type boxes.

The parts 8-9 must not necessarily be made as bushes either. They may for example also consist of holders or the like in which is held a nut, such that bolts instead of screws 10 can be fixed in these parts 8-9 in the second position.

Instead of film hinges 20-21, also other pivoting connections can be applied. Moreover, the pivoting movement must not necessarily provide for an upward tilting movement. In principle, any seat-forming part 8-9 can be swung from any first position into a second service position. Thus, for example, figure 8 represents another variant in a dot and dash line, whereby the seat-forming part, in this case the part 8A, can be pivoted sideways, between a first position coinciding with the position in the dot and dash line on the one hand, and a second position on the other hand, whereby the part 8A will be situated in the same place as the part 8 represented with a full line.

According to an embodiment which is not represented, the seat-forming parts 8-9 can also be suspended to the flush-type box 1 with filamentary cords, whereby they are situated in the first position then, and they are pressed in the openings 14 and/or the recesses 18 by picking them up.

According to a variant which is not represented, no openings 14 or recesses 18 are provided in the side walls 4-5-6-7, but the seat-forming parts 8 and/or 9 are provided with coupling means which make it possible to fix these parts 8 and/or 9 in their second position, for example against the outside of the side walls 4-5 and/or 6-7.

The invention is by no means limited to the above-described embodiments represented in the accompanying drawings; on the contrary, such a flush-type box can be made in all shapes and dimensions while still remaining within the scope of the invention.

## Claims

1. Flush-type box for electric elements of the type which consists of a box-shaped housing with a bottom (3) and side walls (4-5-6-7), whereby a seat-forming part (8-9) for a screw (10) or the like is provided on one or several of the side walls (4-5-6-7), whereby the seat-forming part (8-9), the seat-forming parts (8-9) respectively, can assume at least two positions, a first and a second position respectively, whereby the second position forms a service position, whereas the first position is different in relation to the latter, **characterised in that** the seat-forming part (8-9) concerned is made in one piece with the side wall (4-5-6-7) upon which it is provided, and is made of plastic, and that every seat-forming part (8-9) concerned is hinge-mounted to the accompanying side wall (4-5-6-7).

2. Flush-type box according to claim 1, **characterised in that** it comprises locking means (22) to lock each seat-forming part (8-9) concerned in its second position.

3. Flush-type box according to claim 2, **characterised in that** the locking means (22) consist of a snap-in system, whereby a snap-in automatically occurs when such a seat-forming part (8-9) is moved from the first position into the second position.

4. Flush-type box according to claim 3, **characterised in that** the locking means (22) consist of one or several hook-shaped parts (23-24) provided on the seat-forming part (8-9) concerned and which mesh behind edge parts (25-26) of the accompanying side wall (4-5-6-7).

5. Flush-type box according to claims 1, **characterised in that** every seat-forming part (8-9) concerned of the accompanying side wall (4-5-6-7) is provided by means of one or several bendable parts, in particular film hinges (20-21).

6. Flush-type box according to any of the preceding claims, **characterised in that** every seat-forming part (8-9) concerned is situated thus in its second position that it is situated with its axial axis (A) at right angles or almost at right angles to the surface defined by the open front side (12) of the' flush-type box (1), whereas, in the first position, it extends with its axial axis (A) in another direction in relation to the flush-type box (1).

7. Flush-type box according to any of the preceding claims, **characterised in that** every seat-forming part (8-9) concerned is tilted sideways in its first position, in other words, is situated such that it extends with its axial axis (A) crosswise to the side wall (4-5-6-7) upon which it is provided.

8. Flush-type box according to any of the preceding claims, **characterised in that** every seat-forming part (8-9) concerned in the second position takes place in an opening (14) or recess (18) in the accompanying side wall (4-5-6-7), which opening (14) or recess (18) possibly comprises a break-out part (15-19).

9. Flush-type box according to claim 8, **characterised in that** the above-mentioned opening is situated under the edge of the flush-type box (1); **in that** the flush-type box (1) comprises an edge part (16) which extends continuously over the opening (14); and **in that** the seat-forming part (8-9) concerned, in the second position and seen from the open front side (12) of the flush-type box (1), is situated behind the above-mentioned edge part (16).

10. Flush-type box according to any of the preceding claims, **characterised in that** every seat-forming part (8-9) concerned is situated with its front end (13) at the height of or almost at the height of the front side (12) of the flush-type box (1) in the second position, whereas, in the first position, it is removed from the front side (12) of the flush-type box (1) with its front end (13).

11. Flush-type box according to any of the preceding claims, **characterised in that,** on the inside of one or several side walls (4-5-6-7), it is provided with mesh parts for claws (29), in particular in the shape of a ribbed surface (30) or the like.

## Patentansprüche

1. Einbaudose für elektrische Elemente von dem Typ, bestehend aus einem dosenförmigen Gehäuse mit einem Boden (3) und Seitenwänden (4-5-6-7), wobei an einer oder mehreren der Seitenwände (4-5-6-7) ein sitzbildendes Teil (8-9) für eine Schraube (10) oder dergleichen vorhanden ist, wobei das sitzbildende Teil (8-9) beziehungsweise die sitzbildenden Teile (8-9) mindestens zwei Positionen einnehmen können, nämlich eine erste beziehungsweise eine zweite Position, wobei die zweite Position eine Gebrauchsposition bildet, während die erste Position in Bezug auf letztere unterschiedlich ist, **dadurch gekennzeichnet, dass** das betreffende sitzbildende Teil (8-9) einstückig mit der Seitenwand (4-5-6-7) hergestellt ist, woran es angebracht ist, und aus Kunststoff besteht, und dass jedes betreffende sitzbildende Teil (8-9) scharnierbar an der zugehörigen Seitenwand (4-5-6-7) befestigt ist.

2. Einbaudose nach Anspruch 1, **dadurch gekennzeichnet, dass** sie Verriegelungsmittel (22) umfasst, um jedes betreffende sitzbildende Teil (8-9) in seiner zweiten Position zu verriegeln.

3. Einbaudose nach Anspruch 2, **dadurch gekennzeichnet, dass** die Verriegelungsmittel (22) aus einem Einrastsystem bestehen, wobei automatisch ein Einrasten stattfindet, wenn ein solches sitzbildendes Teil (8-9) von der ersten in die zweite Position bewegt wird.

4. Einbaudose nach Anspruch 3, **dadurch gekennzeichnet, dass** die Verriegelungsmittel (22) aus einem oder mehreren hakenförmigen Teilen (23-24) bestehen, die an dem betreffenden sitzbildenden Teil (8-9) vorgesehen sind und die hinter Randteilen (25-26) der zugehörigen Seitenwand (4-5-6-7) angreifen.

5. Einbaudose nach Anspruch 1, **dadurch gekennzeichnet, dass** jedes betreffende sitzbildende Teil (8-9) der zugehörigen Seitenwand (4-5-6-7) mittels eines oder mehrerer biegbarer Teile, spezieller Filmscharniere (20-21), angebracht ist.

6. Einbaudose nach einem der vorgenannten Ansprüche, **dadurch gekennzeichnet, dass** jedes betreffende sitzbildende Teil (8-9) in seiner zweiten Position derart angeordnet ist, dass es sich mit seiner axialen Achse (A) rechtwinklig oder nahezu rechtwinklig zu der von der offenen Vorderseite (12) der Einbaudose (1) definierten Fläche befindet, während es sich in der ersten Position mit seiner axialen Achse (A) in einer anderen Richtung bezüglich der Einbaudose (1) erstreckt.

7. Einbaudose nach einem der vorgenannten Ansprüche, **dadurch gekennzeichnet, dass** jedes betreffende sitzbildende Teil (8-9) in seiner ersten Position seitwärts gekippt ist, mit anderen Worten, so angeordnet ist, dass es sich mit seiner axialen Achse (A) quer zu der Seitenwand (4-5-6-7), woran es angebracht ist, erstreckt.

8. Einbaudose nach einem der vorgenannten Ansprüche, **dadurch gekennzeichnet, dass** jedes betreffende sitzbildende Teil (8-9) in der zweiten Position in einer Öffnung (14) oder Ausnehmung (18) in der zugehörigen Seitenwand (4-5-6-7) Platz nimmt, welche Öffnung (14) oder Ausnehmung (18) eventuell ein Ausbrechteil (15-19) umfasst.

9. Einbaudose nach Anspruch 8, **dadurch gekennzeichnet, dass** die vorgenannte Öffnung sich unter dem Rand der Einbaudose (1) befindet; dass die Einbaudose (1) ein Randteil (16) umfasst, das sich durchlaufend über die Öffnung (14) erstreckt; und dass das betreffende sitzbildende Teil (8-9) in der zweiten Position, und gesehen ab der offenen Vorderseite (12) der Einbaudose (1), sich hinter dem vorgenannten Randteil (16) befindet.

10. Einbaudose nach einem der vorgenannten Ansprüche, **dadurch gekennzeichnet, dass** jedes betreffende sitzbildende Teil (8-9) sich in der zweiten Position mit seinem Vorderende in Höhe oder nahezu in Höhe der Vorderseite (12) der Einbaudose (1) befindet, während es in der zweiten Position mit seinem Vorderende (13) von der Vorderseite (12) der Einbaudose (1) entfernt ist.

11. Einbaudose nach einem der vorgenannten Ansprüche, **dadurch gekennzeichnet, dass** sie an der Innenseite einer oder mehrerer Seitenwände (4-5-6-7) mit Angriffsteilen für Klauen (29) versehen ist, insbesondere in Form einer gerippten Oberfläche (30) oder dergleichen.

## Revendications

1. Boîtier encastré pour des éléments électriques, du type qui est constitué d'un logement en forme de boîte comportant un fond (3) et des parois latérales (4-5-6-7), une partie faisant office de support (8-9) pour une vis (10) ou analogue étant prévue sur une ou sur plusieurs des parois latérales en question (4-5-6-7), la partie faisant office de support (8-9), les parties faisant office de support (8-9) respectivement pouvant prendre au moins deux positions, une première et une deuxième position respectivement, la deuxième position correspondant à une position de service, tandis que la première position est différente de la dernière citée, **caractérisé en ce que** la partie concernée faisant office de support (8-9) est construite en une seule pièce avec la paroi latérale (4-5-6-7) sur laquelle elle est prévue et est réalisée en une matière plastique, et **en ce que** chaque partie concernée faisant office de support (8-9) est articulée à la paroi latérale correspondante (4-5-6-7).

2. Boîtier encastré selon la revendication 1, **caractérisé en ce qu'**il comprend un moyen de verrouillage (22) pour verrouiller chaque partie concernée faisant office de support (8-9) dans sa deuxième position.

3. Boîtier encastré selon la revendication 2, **caractérisé en ce que** le moyen de verrouillage (22) est constitué d'un système à enclenchement rapide, un enclenchement rapide ayant lieu de manière automatique lorsque ladite partie faisant office de support (8-9) passe de la première position à la deuxième position.

4. Boîtier encastré selon la revendication 3, **caractérisé en ce que** le moyen de verrouillage (22) est constitué par un ou plusieurs éléments en forme de crochets (23-24) qui sont prévus sur la partie concernée faisant office de support (8-9) et qui viennent s'engrener derrière des parties marginales (25-26) des parois latérales correspondantes (4-5-6-7).

5. Boîtier encastré selon la revendication 1, **caractérisé en ce que** chaque partie concernée faisant office de support (8-9) de la paroi latérale correspondante (4-5-6-7) est prévue sous la forme d'un ou de plusieurs éléments pliables, en particulier des articulations en films (20-21).

6. Boîtier encastré selon l'une quelconque des revendications précédentes, **caractérisé en ce que** chaque partie concernée faisant office de support (8-9) est ainsi placée, dans sa deuxième position, dans une direction, avec son axe axial (A), qui forme un angle droit ou approximativement un angle droit par rapport à la surface définie par le côté frontal ouvert (12) du boîtier encastré (1), tandis que, dans la première position, il s'étend avec son axe axial (A) dans une autre direction par rapport au boîtier encastré (1).

7. Boîtier encastré selon l'une quelconque des revendications précédentes, **caractérisé en ce que** chaque partie concernée faisant office de support (8-9) est inclinée latéralement dans la première position, en d'autres termes, vient se placer de telle sorte qu'elle s'étend avec son axe axial (A) transversalement par rapport à la paroi latérale (4-5-6-7) sur laquelle elle est prévue.

8. Boîtier encastré selon l'une quelconque des revendications précédentes, **caractérisé en ce que** chaque partie concernée faisant office de support (8-9) remplace, dans sa deuxième position, dans une ouverture (14) ou dans un évidement (18) dans la paroi latérale correspondante (4-5-6-7), ladite ouverture (14) ou ledit évidement (18) comprenant le cas échéant une partie décrochable (15-19).

9. Boîtier encastré selon la revendication 8, **caractérisé en ce que** l'ouverture susmentionnée est située en dessous du bord du boîtier encastré (1) ; **en ce que** le boîtier encastré (1) comprend une partie marginale (16) qui s'étend en continu par-dessus l'ouverture (14) ; et **en ce que** la partie concernée faisant office de support (8-9), dans sa deuxième position et lorsqu'on regarde à partir du côté frontal ouvert (12) du boîtier encastré (1), est située derrière la partie marginale susmentionnée (16).

10. Boîtier encastré selon l'une quelconque des revendications précédentes, **caractérisé en ce que** chaque partie concernée faisant office de support (8-9) est située, avec son extrémité frontale (13) à hauteur ou approximativement à hauteur du côté frontal (12) du boîtier encastré dans sa deuxième position, tandis que, dans la première position, il fait saillie par rapport au côté frontal (12) du boîtier encastré (1) avec son extrémité frontale (13).

11. Boîtier encastré selon l'une quelconque des revendications précédentes, **caractérisé en ce que,** sur le côté interne d'une ou de plusieurs parois parmi les parois latérales (4-5-6-7), il est muni de parties d'engrènement pour des griffes (29), en particulier sous la forme d'une surface nervurée (30) ou analogue.
